(19) Europäisches Patentamt
European Patent Office
Office européen des brevets

(11) **EP 1 925 639 B1**

(12) **EUROPEAN PATENT SPECIFICATION**

(45) Date of publication and mention
of the grant of the patent:
**08.10.2014 Bulletin 2014/41**

(51) Int Cl.:
***C08L 67/02*** (2006.01)          ***B32B 15/09*** (2006.01)
***B65D 8/16*** (2006.01)          ***B65D 65/40*** (2006.01)

(21) Application number: **06782241.1**

(22) Date of filing: **03.08.2006**

(86) International application number:
**PCT/JP2006/315381**

(87) International publication number:
**WO 2007/018113 (15.02.2007 Gazette 2007/07)**

(54) **FILM FOR LAMINATION OF METAL PLATE**

FILM ZUM LAMINIEREN VON METALLPLATTE

FILM POUR LA DOUBLURE D'UNE TÔLE DE MÉTAL

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.08.2005   JP 2005229855**
**24.08.2005   JP 2005242832**

(43) Date of publication of application:
**28.05.2008   Bulletin 2008/22**

(73) Proprietor: **Toyobo Co., Ltd.**
**Osaka-shi**
**Osaka 530-8230 (JP)**

(72) Inventors:
• **TAKATSU, Yoji**
**Inuyama-shi,**
**Aichi 4848508 (JP)**

• **SHIMIZU, Hideki**
**Chuo-ku, Tokyo 103-8530 (JP)**

(74) Representative: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) References cited:
**EP-A1- 0 798 109          EP-A2- 0 322 405**
**JP-A- 07 207 040          JP-A- 11 254 626**
**JP-A- 2001 207 040**

## Description

## Technical Field

The present invention relates to a thermoplastic resin film preferable for a resin-coated metal plate. Particularly, the present invention relates to a thermoplastic resin film to be preferably used for surface coating of a drawn and ironed can. More particularly, the present invention relates to a film for coating a drawn and ironed can, which is superior in can manufacture processability such as drawing, ironing processing and the like.

## Background Art

As a method for preventing corrosion of an inner wall surface and an outer wall surface of a metal can, a method including laminating a thermoplastic resin film is available. In addition, a polyester film for laminating on a metal material for canned foods is disclosed (see, for example, patent reference 1).

patent reference 1: JP-A-7-227946

This polyester film is superior in the scratch resistance and free of degraded commercial value due to the development of scratches during, for example, delivery of a film-laminated metal plate (hereinafter to be referred to as a "film-laminated metal plate"), or processing of a laminated metal plate by tight winding processing and the like, in a can manufacturing process including forming a metal plate into a cylinder, and tightly winding a lid on the top and bottom opening parts of the cylinder.

In addition, the film is superior in the resistance during tight winding processing, and is superior as a polyester film to be laminated on the inner wall surface of a metal container, since it shows only a small amount of oligomer elution during a heating and hot water treatment (e.g., retort treatment and the like) of a can filled with a food after can manufacturing.

Incidentally, a can for food includes, in addition to what is called a 3-piece can manufactured by attaching a lid on the top and bottom opening parts of a metal cylinder prepared by forming a metal plate into a cylinder, what is called a 2-piece can manufactured by forming a container part by deep-drawing forming a metal plate and tightly winding a lid on the top opening part of the container part.

In the case of a 3-piece can, the film-laminated metal plate is merely formed into a cylindrical shape. In the case of a 2-piece can, however, the film-laminated metal plate is subjected to drawing and ironing forming. Accordingly, to be applicable to a 2-piece can, it is necessary to have good shape-forming property permitting forming following a formed metal plate, and have superior tight adhesion property to the metal plate. When the shape-forming property is insufficient, or the tight adhesion property of the film to the metal plate is insufficient, what is called a delamination phenomenon occurs, wherein a film is detached from a metal plate, or a film gets broken during production of a container part of a 2-piece can.

In a drawing processing, moreover, since a film-laminated metal plate is processed into a container shape during repetitive up and down movements of a punch, a film to be laminated on an inner wall surface of a container is required to have mold releasing property from the punch and, similarly, a film to be laminated on an outer wall surface of a container is required to have mold releasing property from a die. Moreover, the film needs to be also superior in easy-tear property since, when a shape-forming method including punching out a can trunk without leaving a collar in the tip portion thereof is employed during can manufacturing, the film shows poor tear property and beard-shaped film swarf is accumulated during the can manufacturing process, which problematically degrades the can manufacturing performance when the can is industrially manufactured continuously.

EP-A-0798109 relates to a polyester film for a film-laminated metal plate. Furthermore, it discloses the use of a polyethylene terephthalate and/or polyethylene terephthalate polyol block copolymer.

EP-A-0322405 relates to a cable wire coating resin composition comprising poly(tetramethylene terephthalate) as a main component and a block copolymer comprising polytetramethylene terephthalate and poly(polytetramethylene ether) terephthalate.

JP-A-07207040 relates to a film made of a copolymerized polyester wherein the dicarboxylic acid component comprises terephthalic acid and isophthalic acid. Furhtermore, the glycol component comprises ethylene glycol and polyoxyalkylene glycol.

## Disclosure of the Invention

## Problem to be Solved by the Invention

The present invention has been made in view of such situation and an object thereof is to provide a film for coating a drawn and ironed can, which is superior in the shape-forming processability during can manufacturing and applicable as a laminating film for what is called a 2-piece can, a film-laminated metal plate and a film-laminated metal container.

**Means of Solving the Problems**

A film for laminating a metal plate of the present invention, which can achieve the above-mentioned object, component, relative to the total acid content of the polyester resin composition, wherein the thermoplastic polyester resin composition has a weight average molecular weight (A) of more than 40000, after laminating the aforementioned film on a metal substrate, remelting the film with heat at not less than its melting point (what is called remelting treatment), and rapidly cooling the film. comprises:

(i) a thermoplastic polyester resin composition comprising a PET copolymerized with poly(ethylene isophthalate) and a poly(alkylene terephthalate)-poly(tetramethylene oxide) block copolymer, wherein the PET copolymerized with Poly(ethylene isophthalate) contains isophthalic acid within the range of not less than 10 mol% and not more than 20 mol% and the amount of the tetramethylene oxide unit derived from the Polytetramethylene glycol component is 2 - 20 mol% relative to the total acid content of the polyester composition, and

(ii) an antioxidant in a proportion of 0.01 - 1.0 wt%,

wherein after laminating the film on a metal substrate, remelting the film with heat at not less than its melting point, and rapidly cooling the film, the thermoplastic polyester resin composition has a weight average molecular weight (A) of more than 40000, and the tearing stress of the film is not more than 0.7 N when the film thickness is 25 $\mu$m.

In this case, the thermoplastic polyester resin composition preferably has a weight average molecular weight (B) of more than 40000, after laminating the aforementioned film on a metal substrate, remelting the film with heat at not less than its melting point (what is called remelting treatment), rapidly cooling the film, and subjecting the aforementioned remelt-treated plate to can manufacturing processing.

In this case, moreover, a film for coating a drawn and ironed can comprises a thermoplastic polyester resin composition having weight average molecular weights (A) and (B) satisfying the relationship of the following formula 1:

$$(B)/(A) \leq 1 \quad (1)$$

In this case, a metal plate for a drawn and ironed can, which is coated with the aforementioned film for coating a drawn and ironed can, is useful.

In this case, moreover, a drawn and ironed can obtained by subjecting the aforementioned film-coated metal plate to can manufacturing is useful.

**Effect of the Invention**

When used as a laminating film for a 2-piece can, the film for coating a drawn and ironed can of the present invention is superior in the tight adhesion to a metal, shape-forming processability and design.

**Best Mode for Carrying out the Invention**

The thermoplastic resin materials to be used for the film for coating a drawn and ironed can of the present invention is, a thermoplastic polyester resin which is used from the aspects of heat resistance, aroma retention and the like. More particularly, a PET copolymerized with poly(ethylene isophthalate), which contains isophthalic acid within the range of not less than 10 mol% and not more than 20 mol% is used. When the isophthalic acid ratio is less than 10 mol%, defective spreadability is developed during can manufacture in a can manufacturing process, and when it exceeds 20 mol%, the melting peak becomes less than 200°C to impair can manufacturing performance, which is also uneconomical from the aspects of film forming and starting material costs.

In order to improve the shape-forming and tight adhesion property, and tear property of the film-laminated metal plate during can manufacture, the thermoplastic polyester resin composition of the present invention contains a polyoxytetramethylene glycol component having 3 or more repeats of a tetramethylene oxide unit in a proportion of 2 - 20 wt%. When the above-mentioned component is contained in said range, the thermoplastic polyester film obtains elasticity at ambient temperature and at a low temperature, and the shape-forming and tight adhesion property to other resin layers can also be increased. It is particularly effective for improving the shape-forming property during drawing and ironing for can manufacturing, when a high-speed and striking deformation is applied. In addition, it can prevent process abnormality during continuous production, which is due to the accumulation of swarf (beard) caused by poor tear property of the film in can manufacturing.

Polyoxytetramethylene glycol having an average molecular weight of 500 - 3000 is preferably used, with preference given to one having an average molecular weight of 800 - 2000.

In the present invention, the amount of the polyoxytetramethylene glycol component contained in the thermoplastic polyester resin composition is such that the amount of the tetramethylene oxide unit derived from the polyoxytetramethylene glycol component is 2 - 20 mol% relative to the total acid component of the polyester composition. The tetramethylene oxide unit derived from the polyoxytetramethylene glycol component is a constituent unit wherein both ends of a tetramethylene chain form an ether bond with the adjacent tetramethylene chain across an oxygen atom. When the above-mentioned amount is less than 2 mol%, the improvement effect on the can manufacturing performance and tear property is insufficient. When it exceeds 20 mol%, the strength and thermal property of the film are degraded, which possibly degrades the handleability during a film production process and a laminated metal plate production process.

In addition, the amount of the polyoxytetramethylene glycol component contained in the thermoplastic polyester resin composition is more preferably 2 - 10 mol% and particularly preferably 2 - 5 mol%.

According to the present invention a copolymerized polyester wherein polyoxytetramethylene glycol is copolymerized is mixed by melting with the thermoplastic polyester resin of the present invention. In the present invention, the latter melting and mixing method is used since an effect of improving the can shape-forming property and tear property is exerted more efficiently, and particularly, a method including melting and mixing a poly(alkylene terephthalate)-poly(tetramethylene oxide) block copolymer is used.

In addition, the aforementioned thermoplastic polyester preferably has a melting peak within the range of 200°C - 240°C. When the melting peak is less than 200°C, heat resistance and can manufacturing performance are impaired during a can manufacturing process, and when the peak exceeds 240°C, the temperature balance is disrupted in a remelting treatment and the yield decreases. Accordingly, the both cases are not preferable.

The film for coating a drawn and ironed can of the present invention contains 0.01 - 1 wt% of an antioxidant. This aims to suppress a decrease in the molecular weight of the film during a process including laminating the film on a metal substrate, and remelting the film with heat at not less than its melting point (what is called remelting treatment), as well as a can manufacturing process. Particularly, the aforementioned polyalkylene glycol component is susceptible to thermal decomposition and, when the amount of the antioxidant is less than 0.01 wt%, the molecular weight strikingly decreases during the lamination and remelting treatment process. In addition, an amount of not less than 1 wt% is disadvantageous in terms of cost since the effect does not change.

This is because the decomposition caused by the heat in the polyoxyalkylene glycol component contained in the thermoplastic polyester resin composition propagates in the entire thermoplastic polyester resin component.

Examples of the antioxidant to be used for the film for coating a drawn and ironed can of the present invention include primary antioxidants (of phenol series or amine series and having radical trapping action and chain termination action), and secondary antioxidants (of phosphorus series, sulfur series and the like and having peroxide decomposing action), and any of these can be used. Specific examples include phenol series antioxidants (e.g., phenol type, bisphenol type, thiobisphenol type, polyphenol type and the like), amine series antioxidants (e.g., diphenylamine type, quinoline type and the like), phosphorus series antioxidants (e.g., phosphite type, phosphonite type and the like), sulfur series antioxidants (e.g., thiodipropionic acid ester type and the like). Specifically, n-octadecyl-$\beta$-(4'-hydroxy-3,5'-di-t-butylphenyl)propionate, tetrakis[methylene-3-(3',5'-di-t-butyl-4'-hydroxyphenyl)propionate] (commercially available as "Irganox 1010" (trade name)), 1,1,3-tris(2-methyl-4-hydroxy-5-t-butylphenyl)butane, 1,3,5-tris(3,5-di-t-butyl-4-hydroxybenzyl)-S-triazine-2,4,6(1H,3H,5H)-trione, 1,3,5-trimethyl-2,4,6-tris(3,5-di-t-butyl-4-hydroxybenzyl)benzene (commercially available as "Irganox 1330" (trade name)), tris(mixed mono and/or dinonylphenyl)phosphite, cyclic neopentanetetraylbis(octadecylphosphite), tris(2,4-di-t-butylphenylphosphite), 2,2-methylenebis(4,6-di-t-butylphenyl)octylphosphite, di-lauryl-thiodipropionate, di-myristyl-thiodipropionate, di-stearyl-thiodipropionate and the like can be mentioned. These antioxidants may be used alone or two or more kinds thereof may be used in combination.

The film for coating a drawn and ironed can of the present invention preferably contains inert inorganic particles, crosslinked polymer particles and the like or wax as a lubricant.

Examples of the aforementioned inert particles include silica, alumina, kaolin, clay, titanium oxide, calcium phosphate, calcium carbonate, lithium fluoride, barium sulfate, carbon black and the like.

In addition, examples of the aforementioned crosslinked polymer particles include acrylic series monomers such as acrylic acid, methacrylic acid, acrylic acid ester, methacrylic acid ester and the like, styrene series monomers such as styrene, alkyl-substituted styrene, etc. and the like, copolymers with crosslinkable monomer such as divinylbenzene, divinylsulfone, ethylene glycol dimethacrylate, trimethylolpropane trimethylacrylate, pentaerythritol tetramethylacrylate and the like; melamine-based resin; benzoguanamine-based resin; phenol-based resin; silicon-containing resin and the like.

Examples of the aforementioned wax include synthetic wax such as polyolefin-based wax, polyester-based wax and the like, natural wax such as carnauba wax, etc. and the like.

The average particle size of the aforementioned particle-based lubricant is preferably 1 - 3 $\mu$m. When it is less than 1 $\mu$m, an improving effect on the mold releasing property of punch cannot be expressed. Conversely, when it exceeds 3 $\mu$m, an improving effect on the mold releasing property of punch is saturated, and a lubricant easily falls off due to abrasion, or a film may be ruptured when laminated on a metal plate.

The amount of the lubricant to be added is preferably within the range of 0.05 - 2.0 wt%. To set the kinetic friction coefficient under a 50°C environment to not more than 0.30, a lubricant amount of not less than 0.05 wt% is preferable. On the other hand, an amount of not less than 2.0 wt% is merely disadvantageous in terms of cost since the effect on the mold releasing property does not change.

In addition, the film for coating a drawn and ironed can of the present invention preferably contains a smallest possible amount of a low molecular weight compound from the aspects of stain resistance of the can manufacturing line, the aroma retention when used for the inner surface of a can, and the like. In the case of a polyester-based film, for example, the content of a cyclic trimer such as ethylene terephthalate cyclic trimer after a remelting treatment of the film is preferably not more than 0.7 wt%. This aims to suppress precipitation of an oligomer from the film, thereby preventing easy staining of the can manufacturing line and suppressing precipitation of the oligomer into drinks and the like. In the case of 2-piece can production, after a remelting treatment to provide a non-oriented film, a drawing process is performed, and the can is filled with beverage and the like and heat-treated (e.g., retort treatment and the like). This aims to prevent elution of an oligomer from the film during respective processes, and further to prevent transfer of the oligomer into the beverage, adversely influencing the taste and flavor of the beverage and the like.

A method for setting the content of cyclic trimer (e.g., ethylene terephthalate cyclic trimer) in the polyester to not more than 0.7 wt% is not particularly limited, and 1. a method including removal of a cyclic trimer by extracting it with water or an organic solvent from the laminate film after formation thereof, 2. a method including constituting a polyester film using a polyester containing a small amount of a cyclic trimer, and the like can be mentioned. Of these, the method of 2. is preferable since it is economical.

In the above-mentioned method 2., a method of producing a polyester having a small cyclic trimer content is not limited, either, and a solid phase polymerization method; a method including, after polymerization, extracting or removing a cyclic trimer by a heat treatment under reduced pressure or extraction with water or an organic solvent; a combination of these methods; and the like can be mentioned. Particularly, a method including producing a polyester having a small cyclic trimer content by a solid phase polymerization method, and extracting the obtained polyester with water to further reduce cyclic trimer is most preferable because the production amount of cyclic trimer can be suppressed in the film formation process.

The polyester to be used in the present invention is synthesized by a conventionally-known method such as a direct esterification method wherein dicarboxylic acid and diol are directly reacted; a transesterification method wherein dimethyl dicarboxylate and diol are reacted, and the like. These methods may be each performed by any of a batch-wise method and a continuous method. Alternatively, a solid phase polymerization method may be used to increase the molecular weight. The solid phase polymerization method is also preferable because it decreases a cyclic trimer content, as mentioned above. Only one kind of polyester synthesized in the aforementioned manner may be contained in a polyester film, or a mixture of two or more kinds thereof may be contained.

The intrinsic viscosity of a polyester film when the above-mentioned various components are mixed is preferably within the range of 0.6 - 1.2. When the intrinsic viscosity of the polyester is less than 0.6, the mechanical property of the obtained film may be degraded, and even when it exceeds 1.2, the effect on the mechanical property does not change, and therefore, such viscosity is not economical since the producibility of the starting material for polyester also decreases.

The film for coating a drawn and ironed can of the present invention may be coated with a water-dispersible copolymerized polyester resin on its surface to be in contact with a metal plate.

Here, the water-dispersible copolymerized polyester resin is explained. The polyester film of the present invention may be coated with a water-dispersible copolymerized polyester resin in a thickness of 5 - 25 nm on its surface to be in contact with a metal plate. In this case, the water-dispersible copolymerized polyester resin preferably has a Tg of not less than 40°C and a thickness of 5 nm to 25 nm controlled by what is called coating. When the coating thickness is not more than 5 nm, the coating layer suffers from what is called film cracking, thus failing to form an appropriate resin film, and when it exceeds 25 nm, delamination, detachment and the like occur during a retort treatment of the remelted plate, which is not preferable for the quality. The coating treatment may be applied to a stretched film during film forming (in-line) or a film after film forming (off-line). The water-dispersible polymer itself is insoluble in water; however, it is a polymer compound that can be dispersed or dissolved in an aqueous solvent. Specific examples include a polymer compound in which monomer components having a hydrophilic group in the molecule have been copolymerized. Using such polymer, superior close adhesion strength to a metal plate can be achieved.

In addition, since an organic solvent is not used, an adverse influence on the human body and environment can be reduced.

Examples of the water-dispersible polymer compound of the present invention include a polyester resin in which monomer components having a hydrophilic group have been copolymerized. The hydrophilic group refers to, for example, a hydroxyl group, an amino group, a carboxyl group, a sulfonic acid group, or a derivative thereof, a metal salt group thereof, an ether group and the like, which is present in a water-dispersible state after copolymerization of monomers having these groups in the molecule.

Examples of the monomer having a hydrophilic group include metal salts with sulfonic acid-containing monomers such as polyethylene glycol, polypropylene glycol, glycerol, polyglycerol, 5-sulfoisophthalic acid, 4-sulfonaphthalene-2,7-dicarboxylic acid, 5(4-sulfophenoxy)isophthalic acid, etc. and the like.

In addition, there is a method for graft polymerization of a vinyl series monomer having a hydrophilic group onto a polyester copolymer. Examples of the above-mentioned vinyl series monomer having a hydrophilic group include those containing a carboxyl group, a hydroxyl group, a sulfonic acid group, an amide group and the like, and examples of the group that can be converted to a hydrophilic group include those containing an acid anhydride group, a glycidyl group, a chloro group and the like. Of these, one having a carboxyl group is preferable. Examples thereof include monomers such as acrylic acid, methacrylic acid, maleic acid, a salt thereof and the like.

When a water-dispersible copolymerized polyester resin is applied to the surface of the film of the present invention, which surface is to be in contact with a metal plate, the film is preferably laminated such that the coating layer side will be the metal plate side because mold releasing property from a punch can be achieved during drawing forming when the layer having mold releasing property constitutes the surface layer of the film-laminated metal plate.

In addition, the film of the present invention may be a biaxially-oriented film or non-oriented film. Here, the biaxial stretching method may be any of sequential biaxial stretching, simultaneous biaxial stretching, and a combination of these. In the case of sequential biaxial stretching, while a method including longitudinal stretching followed by transverse stretching is generally employed, the order of stretching direction may be reversed. Furthermore, while the orientation of polyester is preferably fixed by a heat treatment after biaxial stretching, longitudinal and/or transverse re-stretching may be performed before the heat treatment after biaxial stretching. Furthermore, one side or both sides of the film may be subjected, nonlimitatively, to a corona discharge treatment during or before and after the stretching process.

A method for laminating the film of the present invention on a metal plate is not particularly limited. For example, dry lamination method, thermal lamination method and the like may be adopted. Specifically, a metal plate is heated to the melting temperature or higher of the surface to be laminated thereon of the film, the film is brought into contact with the surface of the metal plate, and the laminate in this state is passed between nip rolls. Then, lamination is effected by rapid cooling and solidification in a water tank at 10 - 40°C.

In addition, the film may be laminated on one side or both sides of a metal plate. In the case of both side lamination, the lamination may be performed simultaneously or sequentially.

When the biaxially-oriented film-laminated metal plate of the present invention is applied to a 2-piece can, a remelting treatment including heating the film to the melting temperature or higher of the polyester constituting the film, followed by rapid cooling, is preferably performed after lamination, thereby to eliminate the orientation of the polyester. The degree of orientation after the remelting treatment is not more than 10% as determined by X-ray observation and the film can be said to be substantially unoriented. Since a biaxially-oriented film, in which polyester is oriented, is less subject to plastic deformation and difficult to be stretched, a drawing forming process for forming a container part cannot be performed easily. In a severe case, the film may be detached from a metal plate (i.e., delamination phenomenon), broken or scraped during drawing and ironing forming. In contrast, when polyester is substantially non-oriented, the film is free of delamination, breakage and the like since it can follow deformation of a metal plate on which the film is laminated. As a result, shape-forming accompanying plastic deformation of a metal, such as of a 2-piece can, can be performed.

The film-laminated metal container of the present invention is a metal container obtained by appropriately shape-forming a film-laminated metal plate of a biaxially-oriented type or non-oriented type of the present invention, and the shape of the container and the method of forming the metal container are not particularly limited. Specific examples thereof include what is called a 3-piece can for packing the contents by tightly winding a lid on the top and bottom opening parts, as well as a 2-piece can having a container part formed by subjecting a metal plate to drawing forming and the like.

In the metal container of the present invention, the polyester film of the present invention may be formed on the inner wall surface side of the metal container, or on the outer wall surface side thereof. In the case of a 2-piece can, however, the film is preferably used on the container inner wall surface side in view of the proper drawing processing, so that a polyester superior in the mold releasing property can be in contact with a punch.

When drawing and ironing forming is performed, a lubricant may be applied as necessary to the surface of the film that comes into contact with the punch.
The film-laminated metal container of the present invention may be subjected to printing and the like where necessary, and a remelting treatment may be applied again after a can manufacturing process, a printing process and the like.

In addition, the film of the present invention may contain, besides the additive, lubricant, wax and the like recited earlier, UV absorber, plasticizer, pigment, antistatic agent, lubricating agent, crystal nucleating agent and the like as necessary.

In the present invention, a surface-treated steel plate such as a tin-free steel and the like, an aluminum plate or an aluminum alloy plate or a surface-treated aluminum plate or an aluminum alloy plate may be used as a metal plate.

**Examples**

The present invention is explained in the following by referring to the Examples.

Various evaluation methods in the present invention are shown below.

(1) Thermal property of the film

Using a sample (10 mg) obtained by heat-melting a film composition at 300°C for 5 min and cooling it rapidly with liquid nitrogen, an exothermic-endothermic curve (DSC curve) was measured in a nitrogen stream using a differential scanning calorimeter (DSC) at a temperature rising rate of 10°C/min. The endothermic peak temperature associated with the melting was taken as a melting point Tm (°C), and a peak temperature associated with the crystallization during temperature rise was taken as TC (°C).

(2) Molecular weight of the film

Aluminum was removed from a remelted plate or a produced can by a hydrochloric acid treatment, and the film (2 mg) was sampled. Each sample was immersed in HFIP/chloroform = 2/3(v/v) (0.4 ml), dissolved therein, and brought to a constant volume of 8 ml with chloroform. After filtration with a membrane filter (0.2 $\mu$m), the filtrate was applied to GPC. apparatus: TOSOH HLC-8220GPC

column: TSKgel SuperHM-H×2+TSKgel SuperH2000 (TOSOH)
solvent: chloroform/HFIP=98/2(v/v),
flow rate: 0.6 ml/min
concentration: 0.025%
temperature: 40°C
detector: UV 254 nm

The molecular weight was calculated based on standard polystyrene (PS).

(3) Tear property

A 7 cm squared sample was cut out from a laminated metal plate. This sample was immersed in diluted hydrochloric acid to partially remove the metal plate by dissolution, and the film was taken out. This film was notched, and both ends thereof were fixed to the upper and lower chucks of a tensile tester. The film was stretched vertically at a rate of 500 mm/min, and the tearing stress at that time was measured. The thickness of the film subjected to the test was measured. When the tearing stress calculated based on the thickness of 25 $\mu$m is not more than 0.7 N, the breaking property of the film during continuous can manufacturing does not substantially cause any problem.

(4) Can manufacturing performance

A laminated metal plate was formed into a cup by drawing processing, and 300 cans were continuously manufactured by redrawing and ironing processing at a rate of 180 cans/min under the following forming conditions. The level of buckling developed on the upper part of the formed cans was visually observed. The evaluation criteria were set as follows, and O was evaluated as practical.

○: no development of buckling in can opening part
Δ: development of buckling in about 1/3 of the circumference of can opening part
×: development of buckling in not less than 1/3 of the circumference of can opening part (forming conditions) blank diameter: 152 mm, drawing ratio: 1.60, redrawing ratio: 1.44, ironing ratio of can trunk side wall portion: 56% [ironing ratio is calculated by $(t_0-t_1)/t_0 \times 100$ to: plate thickness before processing, $t_1$: plate thickness of can trunk side wall portion after processing]

Drawing and ironing processing were performed.

(5) Quantification method of ethylene terephthalate cyclic trimer

The polyester-based films (about 100 mg) obtained in Examples 1 and 2 and Comparative Examples 1 and 2 were precisely weighed and immersed in 3 ml of hexafluoroisopropyl alcohol/chloroform = 2/3 (V/V, volume ratio) to dissolve polyester. Then, chloroform (20 ml) was added thereto and the polyester was precipitated with methanol (10 ml). The precipitated polyester was filtered and dried, and the amount thereof was measured. Furthermore, the filtrate obtained by filtration of the precipitated polyester was evaporated to dryness, and the resulting product was dissolved in N,N-dimethylformamide (10 ml). The solution was filtered by centrifugation, and the resulting solution was analyzed by HPLC (LC-100) manufactured by Hewlett Packerd Company. The major analysis conditions are as follows.

column: μ-Bondasper C18 5 μ 100Å 3.9 mm × 15 cm (manufactured by Waters Corporation)
eluent A: 2% acetic acid/water (v/v)
eluent B: acetonitrile
gradient B%: 10→100% (0→55 min) linear
flow rate: 0.8 ml/min
detection wavelength: UV-258 nm

(6) Average particle size of particles

Fine silica particles were dispersed in ion-exchange water stirred at a given rotation rate (about 5000 rpm) in a high-speed stirrer, and the dispersion was added to ISOTON (physiological saline). The mixture was further dispersed by an ultrasonic dispersion apparatus. The particle size distribution was determined by the Coulter counter method using a Coulter counter Multisizer II (Beckman Coulter, Inc.), and the particle size at 50% of cumulative weight distribution was calculated as an average particle size.
Next, the kind and content of polyester used for Examples and Comparative Examples are explained.
A: poly(ethylene terephthalate/isophthalate) (repeating unit of ethylene isophthalate 12 mol%, IV=0.74, containing ethylene terephthalate cyclic trimer 0.5 wt%).
Into a reactor equipped with an inlet, a thermometer, a pressure gauge, a distillation tube with a rectifying column, and an impeller were charged 88 parts by weight of terephthalic acid, 12 parts by weight of isophthalic acid, 82 parts by weight of ethylene glycol (molar ratio of ethylene glycol/total acid components = 2.2), 0.05 mol% of germanium oxide as Ge element relative to the acid components, and 0.05 mol% of magnesium acetate as Mg element relative to the acid components; nitrogen was introduced with stirring the mixture to maintain the pressure in the system at 0.3 MPa; and an esterification reaction was carried out at 230°C - 250°C while distilling away generated water from the system. After completion of the reaction, trimethyl phosphate was added at 250°C in an amount of 0.04 mol% as P content. The temperature was raised while gradually reducing the pressure, and a polycondensation reaction was carried out at 275°C under vacuum of not more than 1.0 hPa to give a polyester. Then, the polyester was heat-treated at 200°C under vacuum of 1.0 hPa for 12 hr to give PET-I(12). The obtained polyester had an intrinsic viscosity of 0.74 (dl/g) and the cyclic ethylene terephthalate trimer content was 0.5 wt%.
B: poly(ethylene terephthalate/isophthalate) (repeating unit of ethylene isophthalate: 12 mol%, IV=0.74, ethylene terephthalate cyclic trimer: 0.5 wt%, added and adjusted so that $SiO_2$ content would be 10000 ppm during polymerization)
Into a reactor equipped with an inlet, a thermometer, a pressure gauge, a distillation tube with a rectifying column, and an impeller were charged 90 parts by weight of terephthalic acid, 12 parts by weight of isophthalic acid, 82 parts by weight of ethylene glycol (molar ratio of ethylene glycol/total acid components = 2.2), 0.05 mol% of germanium oxide as Ge element relative to the acid components, 0.05 mol% of magnesium acetate as Mg element relative to the acid components and amorphous silica particles having an average particle size of 1.3 μm; nitrogen was introduced with stirring the mixture to maintain the pressure in the system at 0.3 MPa; and an esterification reaction was carried out at 230°C - 250°C while distilling away generated water from the system. After completion of the reaction, trimethyl phosphate was added at 250°C in an amount of 0.04 mol% as P content. The temperature was raised while gradually reducing the pressure, and a polycondensation reaction was carried out at 275°C under vacuum of not more than 1.0 hPa to give a polyester.
Then, the polyester was heat-treated at 200°C under vacuum of 1.0 hPa for 12 hr to give PET-I(12). The obtained polyester had an intrinsic viscosity of 0.74 (dl/g) and the cyclic ethylene terephthalate trimer content was 0.5 wt%. C: poly(tetramethylene terephthalate)-poly(tetramethylene oxide) block polyester copolymer
Into a reactor equipped with an inlet, a thermometer, a pressure gauge, a distillation tube with a rectifying column, and an impeller were charged 100 parts by weight of dimethyl terephthalate, 75 parts by weight of 1,4-butanediol, 75 parts by weight of polytetramethylene glycol (average molecular weight: 1000) and 0.05 part by weight of n-butyl titanate, and a transesterification reaction was carried out at 190°C - 230°C while distilling away generated methanol from the system. After completion of the reaction, 0.05 part by weight of tetra-n-butyl titanate and 0.025 part by weight of phosphoric acid were added, and a polycondensation reaction was carried out at 250°C under reduced pressure (not more than 1.0 hPa) to give a polyester copolymer (poly(tetramethylene terephthalate)-poly(tetramethylene oxide) block copolymer, poly(tetramethylene oxide) content 40 wt%, intrinsic viscosity 0.75). (Trade name: GP301, manufactured by TOYOBO CO., LTD.) D: Polyester containing 5 wt% of antioxidant

Polyester A (95 parts by weight) and a phenolic antioxidant (5 parts by weight) (Irganox 1010, manufactured by Ciba-Geigy Ltd.) were melt-kneaded in a biaxial extruder to give polyester resin (D) containing 5 wt% of antioxidant.

(Example-1)

[Production of polyester film]

Polyesters A/B/C/D=76/14/5/5 (wt%) as starting materials were dried at 100°C for 24 hr, melted in a single screw extruder at 270°C, and extruded from a T-die in layers on a chill roll to give an unoriented sheet. This unoriented sheet was longitudinally stretched 3.3-fold at a preheating temperature of 80°C and a stretching temperature of 100°C, further transversely stretched 3.7-fold on a tenter at a preheating temperature of 80°C and a stretching temperature of 100°C, and heat-treated at 180°C for 8 sec to give a polyester film having a thickness of 10 μm.

[Production of film-laminated metal plate]

The polyester film prepared above was placed on both sides of a preheated aluminum plate so that the polyester film is in contact with the aluminum plate, and they were passed between nip rolls for lamination. The laminate was heat-treated and immediately thereafter rapidly cooled in a water tank at 10 - 40°C to give an aluminum plate having a film laminated on both sides of the plate. During lamination, the laminate film of the Example was free of initial close adhesion property or change in tension, winding around the nip rolls and the like, and therefore, the applicability of the film of the Example to lamination was fine.

Furthermore, the film-laminated aluminum plate was heated at 270°C and then air-cooled, and further rapidly cooled in water to give a remelted aluminum plate. The molecular weight did not decrease during remelting, and a good remelted plate was obtained.

[Production of film-laminated metal container]

The remelted aluminum plate prepared above was subjected to drawing and ironing forming so that a plate thickness decrease would be 30%, whereby a film-laminated metal container was formed. The produced can product was free of a decrease in the molecular weight of the film. During shape-forming, the film was free of delamination and breakage, the can manufacturing performance and tear property were superior, and elution of an oligomer into a beverage and precipitation from the film were not observed.

(Example-2)

Film forming and can manufacturing processes and evaluation were performed according to Example-1 except that polyesters A/B/C/D=71/14/10/5 (wt%) were used as starting materials.

Like Example-1, the resulting beverage can was free of a decrease in the molecular weight of the film during remelting and can manufacturing, the can manufacturing performance and tear property were superior, and elution of an oligomer into a beverage and precipitation from the film were not observed.

(Comparative Example-1)

Film forming and can manufacturing processes and evaluation were performed according to Example-1 except that polyesters A/B/C/D=79/14/2/5 (wt%) were used as starting materials.

While the resulting beverage can was free of a decrease in the molecular weight and the like, but the tear property was inferior to the quality of the Examples.

(Comparative Example-2)

Film forming and can manufacturing processes and evaluation were performed according to Example-1 except that polyesters A/B/C/D=80/14/5/1 (wt%) were used as starting materials.

The resulting beverage can showed a striking decrease in the molecular weight and was inferior to the quality of the Examples.

The above-mentioned results are shown in Table 1.

[Table 1]

| | Ex. 1 | Ex. 2 | Comp. Ex. 1 | Comp. Ex. 2 |
|---|---|---|---|---|
| resin composition | A/B/C/D-76/14/5/5 | A/B/C/D= 71/14/10/5 | A/B/C/D-79/14/2/5 | A/B/C/D= 80/14/5/1 |
| content (mol%) of polyalkylene glycol | 5.2 | 10.2 | 2.2 | 5.2 |
| film melting point (°C) | 235 | 230 | 235 | 235 |
| film resin molecular weight (A) (MW) after remelting | 48000 | 42000 | 48000 | 35000 |
| film resin molecular weight (B) (MW) after can manufacturing | 47000 | 42000 | 47000 | 26000 |
| thermoplastic resin cyclic trimer content (wt%) after can manufacturing | 0.6 | 0.6 | 0.6 | 1.2 |
| tear property (stress N) | 0.53 | 0.45 | 0.76 | 0.53 |
| can manufacturing performance | ○ | ○ | ○ | × |

## Industrial Applicability

The film for laminating a metal of the present invention is superior in the shape-forming processability during can manufacturing, can be utilized as a laminate film for 2-piece cans, and greatly contributes to the industry.

## Claims

1. A film for laminating a metal plate comprising

   (i) a thermoplastic polyester resin composition comprising a PET copolymerized with poly(ethylene isophthalate) and a poly(alkylene terephthalate)-poly(tetramethylene oxide) block copolymer, wherein the PET copolymerized with poly(ethylene isophthalate) contains isophthalic acid within the range of not less than 10 mol% and not more than 20 mol% and the amount of the tetramethylene oxide unit derived from the polytetramethylene glycol component is 2 - 20 mol% relative to the total acid content of the polyester composition, and
   (ii) an antioxidant in a proportion of 0.01 - 1.0 wt%,

   wherein after laminating the film on a metal substrate, remelting the film with heat at not less than its melting point, and rapidly cooling the film, the thermoplastic polyester resin composition has a weight average molecular weight (A) of more than 40000, and the tearing stress of the film is not more than 0.7 N when the film thickness is 25 μm.

2. The film of claim 1, wherein after laminating the film on a metal substrate, remelting the film with heat at not less than its melting point, rapidly cooling the film, and subjecting the remelt-treated plate to can manufacturing processing, the thermoplastic polyester resin composition has a weight average molecular weight (B) of more than 40000.

3. The film of claim 2, wherein the thermoplastic polyester resin composition has weight average molecular weights (A) and (B) satisfying the relationship of the following formula 1:

$$(B)/(A) \leq 1 \quad (1)$$

4. A film for laminating a metal plate, wherein the film of claim 1 or 2 is coated on a metal plate.

5. A drawn and ironed can obtained by subjecting the film-laminated metal plate of claim 4 to can manufacturing.

**Patentansprüche**

1. Folie zum Laminieren eines Metallblechs, umfassend:

(i) eine thermoplastische Polyesterharzzusammensetzung, die ein mit Polyethylenisophthalat copolymerisiertes PET und ein Polyalkylenterephthalat-Polytetramethylenoxid-Blockcopolymer umfasst, wobei das mit Polyethylenisophthalat copolymerisierte PET Isophthalsäure im Bereich von nicht weniger als 10 Mol-% und nicht mehr als 20 Mol-% enthält und die Menge der von der Polytetramethylenglycol-Komponente abgeleiteten Tetramethylenoxid-Einheiten 2 bis 20 Mol-% beträgt, bezogen auf den Gesamtsäuregehalt der Polyesterzusammensetzung; und
(ii) ein Antioxidans in einem Anteil von 0,01 bis 1,0 Gew.-%;

wobei die thermoplastische Polyesterharzzusammensetzung nach dem Laminieren der Folie auf ein Metallsubstrat, Umschmelzen der Folie unter Wärme bei nicht weniger als ihrem Schmelzpunkt und schnellen Abkühlen der Folie ein Gewichtsmittel des Molekulargewichts (A) von mehr als 40 000 aufweist und die Zerreißspannung der Folie nicht größer als 0,7 N ist, wenn die Foliendicke 25 $\mu$m ist.

2. Folie gemäß Anspruch 1, wobei die thermoplastische Polyesterharzzusammensetzung nach dem Laminieren der Folie auf ein Metallsubstrat, Umschmelzen der Folie unter Wärme bei nicht weniger als ihrem Schmelzpunkt, schnellen Abkühlen der Folie und Verarbeiten des umschmelzbehandelten Blechs bei der Dosenherstellung ein Gewichtsmittel des Molekulargewichts (B) von mehr als 40 000 aufweist.

3. Folie gemäß Anspruch 2, wobei die thermoplastische Polyesterharzzusammensetzung Gewichtsmittel des Molekulargewichts (A) und (B) aufweist, die der Beziehung der folgenden Formel 1 genügen:

$$(B)/(A) \leq 1 \qquad (1).$$

4. Folie zum Laminieren eines Metallblechs, wobei die Folie gemäß Anspruch 1 oder 2 auf ein Metallblech aufgetragen ist.

5. Gezogene und abgestreckte Dose, erhalten durch Verarbeiten des folienlaminierten Metallblechs gemäß Anspruch 4 in der Dosenherstellung.

**Revendications**

1. Film pour la stratification d'une plaque métallique comprenant :

(i) une composition de résine de polyester thermoplastique comprenant un PET copolymérisé avec un poly(isophtalate d'éthylène) et un copolymère séquencé de poly(téréphtalate d'alkylène)-poly(oxyde de tétraméthylène), dans laquelle le PET copolymérisé avec un poly(isophtalate d'éthylène) contient de l'acide isophtalique à hauteur de pas moins de 10 % en moles et pas plus de 20 % en moles et la quantité du motif d'oxyde de tétraméthylène dérivé du composant de polytétraméthylène glycol est de 2 à 20 % en moles par rapport à la teneur en acide totale de la composition de polyester, et
(ii) un antioxydant en une proportion de 0,01 à 1,0 % en poids,

dans lequel après la stratification du film sur un substrat métallique, la refusion du film avec une chaleur non inférieure à son point de fusion et le refroidissement rapide du film, la composition de résine de polyester thermoplastique a un poids moléculaire moyen en poids (A) de plus de 40 000 et la contrainte d'arrachement du film n'est pas supérieure à 0,7 N lorsque le film a une épaisseur de 25 $\mu$m.

2. Film selon la revendication 1, dans lequel après la stratification du film sur un substrat métallique, la refusion du film avec une chaleur non inférieure à son point de fusion, le refroidissement rapide du film et la soumission de la plaque traitée par refusion à un procédé de fabrication de boîte, la composition de résine de polyester thermoplastique a un poids moléculaire moyen en poids (B) de plus de 40 000.

3. Film selon la revendication 2, dans lequel la composition de résine de polyester thermoplastique a des poids moléculaires moyens en poids (A) et (B) satisfaisant la relation de la formule (1) suivante :

$$(B)/(A) \leq 1 \qquad (1)$$

4. Film pour la stratification d'une plaque métallique, dans lequel le film selon la revendication 1 ou 2 est plaqué sur une plaque métallique.

5. Boîte étirée et emboutie obtenue par la soumission de la plaque métallique stratifiée avec un film selon la revendication 4 pour la fabrication d'une boîte.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7227946 A
- EP 0798109 A
- EP 0322405 A
- JP 07207040 A